# EUROPÄISCHE PATENTSCHRIFT

(11) **EP 3 065 585 B1**
(45) Veröffentlichungstag und Bekanntmachung des Hinweises auf die Patenterteilung: **14.07.2021**
(21) Anmeldenummer: 14824380.1
(22) Anmeldetag: 30.10.2014
(51) Int. Cl.: B32B 5/02, A41D 27/24, B32B 25/08, B32B 25/10, A62D 5/00, B32B 7/12, B32B 27/34, B32B 25/16, B32B 27/08, B32B 25/20, B32B 27/12, B32B 27/16, B32B 27/28, B32B 27/30

(54) **MEHRSCHICHTIGES BAND, INSBESONDERE FÜR MEHRSCHICHTIGE STOFFBAHNEN, BESONDERS FÜR SCHUTZANZÜGE**
MULTILAYER WEB, IN PARTICULAR FOR MULTILAYER FABRIC WEBS, PARTICULARLY FOR PROTECTIVE CLOTHING
BANDE MULTICOUCHES, DESTINÉE EN PARTICULIER À DES LÉS DE TISSU MULTICOUCHES, NOTAMMENT POUR DES VÊTEMENTS DE PROTECTION

(30) Priorität: 04.11.2013 DE 102013222331; 29.10.2014 DE 102014222114
(43) Veröffentlichungstag der Anmeldung: 14.09.2016
(73) Patentinhaber: Tesimax - Altinger GmbH, 75242 Neuhausen-Steinegg (DE)
(72) Erfinder: OVERKAMP, Andre, 37434 Obernfeld (DE); WEBER, Thomas, 37115 Duderstadt (DE); GERLACH, Torsten, 37154 Northeim (DE); EGNER, Sabine, 75181 Pforzheim (DE)
(74) Vertreter: Wacker, Jost Oliver
(86) Internationale Anmeldenummer: PCT/EP2014/073373
(87) Internationale Veröffentlichungsnummer: WO 2015/063226

(56) Entgegenhaltungen:
- EP-A1- 0 320 258
- WO-A1-89/11392
- US-A1- 2007 044 906
- US-A1- 2010 266 852
- None

## Beschreibung

Die Erfindung betrifft ein Schutzanzug mit wenigstens einem mehrschichtigen Band für mehrschichtige Stoffbahnen.

Bänder bzw. Streifen werden oft auch als Tapes bezeichnet. Diese Tapes dienen für mehrschichtige Stoffbahnen zum Zusammenfügen einzelner Stoffbahnen und / oder zum nachträglichen Abdecken von Undichtigkeiten bspw. bei Rissbildung und / oder vor allem zum Abdichten der Nahtstellen insbesondere bei Schutzanzügen.

Schutzanzüge, insbesondere Chemikalienschutzanzüge, werden bei der Herstellung an definierten Nahtstellen vernäht. Hierdurch entstehen kleine Löcher an den ansonsten permeationsdichten Stoffbahnen. Damit durch diese Löcher nicht sofort Chemikalien eindringen können, werden die Nähte mit einem Tape abgedichtet. Je nach Material oder Verfahren können diese Tapes aufgeklebt oder aufgeschweißt werden. Diese Tapes bestehen in der Regel aus einem vulkanisierten oder unvulkanisierten Elastomer oder aus einem Kunststoff. So sind bspw. Schutzanzüge, die mit so genannten Nahtdichtbändern versehen sind, aus DE101054029A1, EP0320258A1, US2007/044906A1 oder DE 10 2005 051 919 B3 bekannt. Dieses Nahtdichtband oder Nahteinfassband ist bspw. in DE 10 2005 051 919 B3 aus einem Vliesfilterstoff oder einer semipermeablen Membran ausgebildet. In US2004/0139528A1 werden "sealing tapes" als Feuchtigkeitsbarriere zum Abdecken im Bereich des Reißverschlusses verwendet, während in DE8710165U1 aufgeklebte Abdeckstreifen die im angezogenen Zustand freiliegenden Nähte abdecken. Diese Tapes haben zumeist keine besonderen Barriereeigenschaften, so dass die Permeationszeiten und damit die Dichtigkeit gegenüber Chemikalien an diesen Nahtstellen häufig schlechter ist als an dem restlichen Schutzanzugstoff.

Aufgabe der vorliegenden Erfindung ist es, Schutzanzüge, insbesondere mit mehrschichtigen Stoffbahnen, an den Nahtstellen durch ein mehrschichtiges Band derart abzudichten zu können, dass keine Chemikalien über die Nähte in den Anzug gelangen können. Gleichzeitig soll das mehrschichtige Band eine gute Hitzebeständigkeit haben, flexibel sein und das Gewicht des Endproduktes nicht unnötig weiter erhöhen.

Gelöst wird diese Aufgabe durch ein Schutzanzug gemäß Anspruch 1.

Die beiden Außenschichten A1 und A2 bestehen aus Chlorsulfonyl-Polyethylen-Kautschuk (CSM).

Die beiden Außenschichten A1 und A2 enthalten zusätzlich in der Regel weitere Mischungsingredienzien. Die weiteren Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungsmittel und/oder ein Weichmacher und/oder ein Alterungsschutzmittel sowie gegebenenfalls weitere Zusatzstoffe (z.B. Farbpigmente). Diesbezüglich wird auf den allgemeinen Stand der Mischungstechnologie verwiesen.

Den Kautschukmischungen der beiden Außenschichten A1 und A2 des mehrschichtigen Tapes kann jeweils ein hitze- und chemikalienbeständiger Füllstoff in Pulverform beigemischt sein. Zu nennen ist hier insbesondere ein fluorhaltiger Kunststoff, insbesondere wiederum Polytetrafluorethylen (PTFE). Auch ist es vorteilhaft, wenn die beiden Außenschichten A1 und A2 jeweils noch wenigstens ein Flammschutzmittel enthalten. Hierbei können alle der fachkundigen Person bekannten Flammschutzmittel verwendet werden, insbesondere Flammschutzmittel, welche frei sind von Halogenen bzw. Holgenverbindungen und frei von Antimon bzw. Antimonverbindungen ist.

Die Zusammensetzung der beiden Außenschichten A1 und A2 kann dabei gleich oder verschieden voneinander sein. Sofern sie verschieden voneinander sind, kann sich dieses auf die qualitative und / oder auf die quantitative Zusammensetzung beziehen.

Bevorzugt ist es zudem, wenn wenigstens eine Außenseite unvulkanisiert ist, insbesondere die Außenseite, welche sich später in direktem Kontakt mit der Nahtstelle befindet. Hierdurch kann das Tape auf die Naht aufgeschweißt werden und einen besonders guten Haftverbund bilden.

Die Kautschukmischungen sind gut verarbeitbar und zudem kalandrierbar.

Die Zwischenschicht Z ist zwischen den beiden Außenschichten A1 und A2 angeordnet. Sie muss sich durch eine niedrige Permeation auszeichnen, um zuverlässig die Nahtstellen gegenüber Chemikalien abdichten zu können. Die Zwischenschicht Z umfasst dabei wenigstens eine Folie, kann aber auch aus mehreren, bevorzugt zwei, Folien aufgebaut sein. Als Folienwerkstoffe kommen insbesondere Polyamid (PA), Polyimid (PI), Ethylenvinylalkohol (EVOH), Polyvinylalkohol (PVOH), Polyvinylchlorid (PVC), Polypropylen (PP), Polyethylen (PE), Fluorpolymere (FEP, PTFE) oder Polyetheretherketon (PEEK) zum Einsatz. Von besonderer Bedeutung ist Polyamid, insbesondere Polyamid 6, Polyamid 6.6, Polyamid 11, Polyamid 12, Polyamid 6.10, Polyamid 6.12 oder Copolyamide. Die genannten Werkstoffe können hierbei einzeln oder in Kombination verwendet werden.

Handelt es sich um eine mehrlagige Folie, insbesondere um eine zweilagige Folie, so ist wenigstens eine Lage aus PTFE.

Die Zwischenschicht Z weist eine Gesamtdicke von 0,01 mm bis 2 mm auf, wobei insbesondere bei einer einlagigen Folie mit einer geringe Dicke von 0,003 mm bis 0,050 mm hochwirksame Zwischenschichten realisierbar sind, verbunden mit einer Gewichtsreduzierung der Stoffbahn.

Die Zwischenschicht Z kann ein- oder beidseitig haftfreundlich präpariert sein, insbesondere unter dem Aspekt der Oberflächenaktivierung, wobei hier insbesondere wiederum das Anätzen oder Aufrauen zu nennen sind. Von besonderer Bedeutung ist dabei das Anätzen. Die Oberflächenveränderung bzw. Oberflächenbehandlung durch Anätzen erfolgt nach bekannten chemischen oder physikalischen Methoden, beispielsweise mittels Flammenbehandlung, Corona-Entladung, Sputtering, Plasmabehandlung, Natrium-Ammoniak-Verfahren oder Natrium-Naphthalin-Verfahren. Auf diese Weise wird bei der Vulkanisation ein besonders dauerfester Haftverbund der Zwischenschicht Z mit den einschichtigen Haftschichten H1 und H2 erzielt.

Sowohl die Haftschicht H1 als auch die Haftschicht H2 sind aus wenigstens Chlorsulfonyl-Polyethylen-Kautschuk (CSM).

Weitere Mischungsbestandteile können Füllstoffe, wie bspw. Ruß, Alterungsschutzmittel, Vulkanisationssysteme, etc. sein.

Der Haftvermittler wird in Mengen von jeweils 2 bis 5 Gew. -% eingesetzt. Durch den Einsatz einer einschichtigen Haftschicht wird das Endprodukt, z. Bsp. der Schutzanzug, in seiner Flexibilität nicht beeinträchtigt und gleichzeitig findet keine unnötige Gewichtserhöhung statt. Weiterhin ist allerdings eine ausreichende Anbindung sowohl an die Zwischenschicht Z als auch an die beiden Außenschichten A1 und A2 gewährleistet.

Ebenso ist es möglich, dass sich zwischen der Zwischenschicht Z und wenigstens einer der beiden Außenschichten A1 und A2 noch jeweils wenigstens eine Festigkeitsträgerschicht befindet. Diese Festigkeitsträgerschicht, die vorzugsweise aus einem textilen Werkstoff besteht, kann ein- oder mehrlagig ausgebildet sein, wobei zumeist die einlagige Ausführung unter dem Aspekt der Gewichtsreduzierung zum Einsatz gelangt. Die Festigkeitsträgeschicht kann als Gewebe, Gewirke oder Gestrick ausgebildet sein, wobei das Vorliegen als Gewebe bevorzugt ist. Der textile Werkstoff ist insbesondere ein Polyamid (z.B. PA 6, PA 6.6) und/oder ein Polyester (PES) und/oder ein Aramid (z.B. Para-Aramid). Die Festigkeitsträgerschicht kann zudem haftfreundlich präpariert sein.

Gemäß der Erfindung, wird hierbei wenigstens ein mehrschichtiges Band auf einer Naht zwischen zwei Materialschnittteilen des Schutzanzuges angebracht. Durch die Verwendung des mehrschichtigen Bandes können dabei die einzelnen Materialschnittteile des für den Schutzanzug verwendeten Funktionsmaterials insbesondere hinsichtlich der Dichtigkeit gegenüber aggressiven Medien, wie beispielsweise Lösemitteln, zuverlässig miteinander verbunden werden.

Gemäß der Erfindung, ist das mehrschichtige Band mit einer jeweiligen Außenseite der Materialschnittteile verschweißt. Durch die Schweißverbindung kann insbesondere auch bei hoher mechanischer Beanspruchung des Schutzanzuges eine dauerhaft stabile Verbindung zwischen dem mehrschichtigen Band und den Materialschnittteilen und damit eine dauerhafte Dichtigkeit der gesamten Naht gegenüber aggressiven Medien gewährleistet werden.

Gemäß der Erfindung, ist die den Materialschnittteilen zugewandte Außenschicht des mehrschichtigen Bandes aus dem gleichen schweißbaren Material gebildet, wie die Außenseiten der Materialschnittteile. Hierdurch ist ein besonders einfaches und zuverlässiges Verschweißen des mehrschichtigen Bandes und der betreffenden Materialschnittteile möglich, wie beispielsweise durch Druckaufbringung mittels einer Walze und gleichzeitiger Erhitzung des Nahtbereiches mit einer hohen Temperatur.

Gemäß der Erfindung, ist dabei das schweißbare Material durch Chlorsulfonyl-Polyethylen-Kautschuk (CSM) gebildet, wodurch das mehrschichtige Band und die Materialschnittteile besonders gut miteinander verschweißt werden können. Zudem weist der Schutzanzug hierdurch insgesamt eine hohe Elastizität und einen daraus resultierenden hohen Tragekomfort sowie eine hohe Widerstandsfähigkeit gegenüber chemischen und mechanischen Beanspruchungen auf, wie beispielsweise eine hohe Abriebs-, Durchstich- und Reißfestigkeit.

In den Figuren ist eine beispielhafte Ausführungsform der Erfindung dargestellt.

Es zeigen:
- Figur 1: einen Schnitt durch das mehrschichtiges Band,
- Figur 2: eine perspektivische Ansicht eines Nahtbereiches eines Schutzanzuges mit einem mehrschichtigen Band gemäß Fig. 1 und
- Figur 3: einen Schnitt durch den Nahtbereich nach Fig.2 in Richtung III.

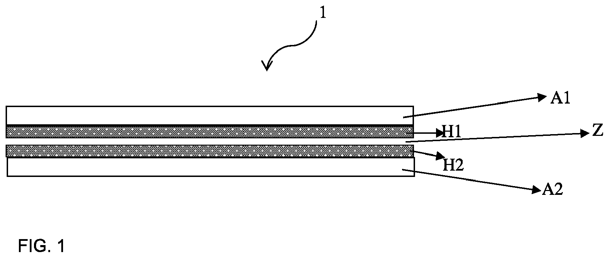

Nach Figur 1 umfasst das mehrschichtige Band 1 zwei Außenschichten A1 und A2 aus jeweils einer hitze- und chemikalienbeständigen vulkanisierten Kautschukmischung jeweils auf der Basis von Silikonkautschuk und / oder Fluuorkautschuk. Des Weiteren umfasst das mehrschichtige Band eine Zwischenschicht Z aus wenigstens einer PTFE Folie und zwei einschichtige Haftschichten H1 und H2, welche sich jeweils zwischen der Zwischenschicht Z und den beiden Außenschichten A1 und A2 befinden. Zusätzlich zu den beiden Haftschichten H1 und H2 kann die Zwischenschicht Z oberflächenaktiviert sein, und zwar nach den oben erwähnten Methoden.

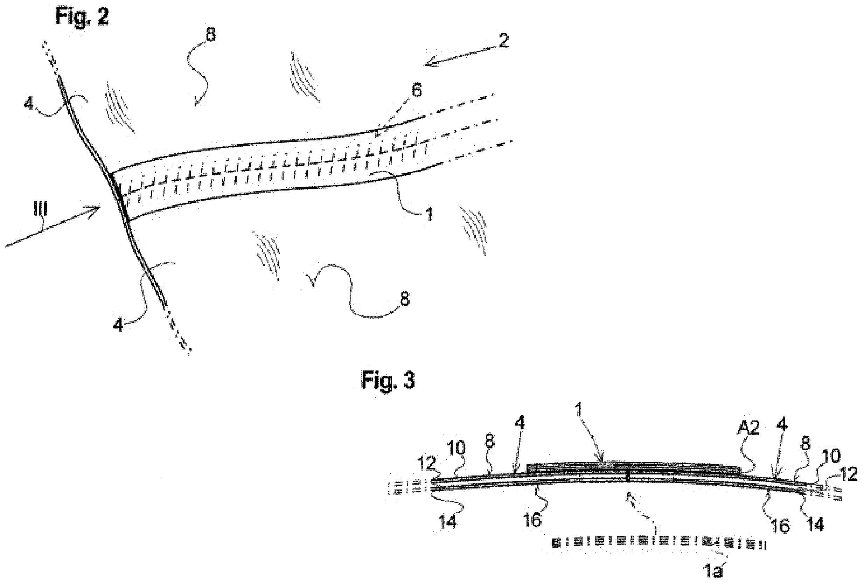

Die Fig. 2 zeigt anhand eines beispielhaften Ausschnittes eines Schutzanzugs 2 einen Nahtbereich, in dem zwei Materialschnittteile 4 mittels einer Naht 6 miteinander verbunden sind. Die Naht 6 wird dabei durch das mehrschichtige Band 1 abgedeckt, das mit jeweils einer ersten Außenseite 8 der beiden Materialschnittteile 4 verbunden ist.

Wie insbesondere aus Fig. 3 zu entnehmen ist, weisen die beiden Materialschnittteile 4 hierbei einen Schichtaufbau auf, bei dem die ersten Außenseiten 8 jeweils durch eine erste Materialschicht 10 aus Chlorsulfonyl-Polyethylen-Kautschuk (CSM) gebildet sind. Ebenso ist auch zumindest die den beiden Materialschnittteilen 4 zugewandte Außenschicht A2 des mehrschichtigen Bandes 1 aus Chlorsulfonyl-Polyethylen-Kautschuk (CSM) gebildet. Das mehrschichtige Band 1 ist dabei mit den beiden Materialschnittteilen 4 verschweißt.

Die den Außenseiten 8 abgewandte Außenschicht A1 des mehrschichtigen Bandes 1 ist auch aus Chlorsulfonyl-Polyethylen-Kautschuk (CSM) gebildet.

Zur Herstellung der abgedeckten Naht 6 kann das mehrschichtige Band 1 beispielsweise durch gleichzeitige Druck- und Wärmebeaufschlagung mit den Materialschichten 10 verschweißt werden. Um dabei einen kontinuierlichen Herstellungsvorgang zu ermöglichen, kann dabei zur Aufbringung des Druckes eine Druckwalze verwendet werden (nicht dargestellt). Gleichzeitig wird der Nahtbereich hierbei mit einer hohen Temperatur beaufschlagt. Auf diese Weise kann über die gesamte Erstreckung der Naht 6 ein beidseitig dichtes Verschweißen des mehrschichtigen Bandes 1 mit den beiden Materialschnittteilen 4 gewährleistet werden.

Wie aus Fig. 3 ferner zu entnehmen ist, so haben die Materialschnittteile 4 unter Zwischenlage eines Trägermaterials 12, das beispielsweise aus Polyamid oder Kevlar besteht, jeweils eine zweite Materialschicht 14, die ebenfalls aus Chlorsulfonyl-Polyethylen-Kautschuk (CSM) besteht und eine zweite Außenseite 16 bildet.

Um eine besonders hohe Dichtigkeit der Naht 6 gewährleisten zu können, kann an dieser zweiten Außenseite 16 der Materialschnittteile 4 ein zweites mehrschichtiges Band 1a angebracht werden, wie in Fig. 3 durch strichpunktierte Linien dargestellt. Das zweite mehrschichtige Band 1a kann dabei beispielsweise in gleicher Weise an der zweiten Außenseite 16 angeschweißt werden wie das erste Band 1 an der ersten Außenseite 8.

### Bezugszeichenliste

### (Teil der Beschreibung)

- 1, la: mehrschichtiges Band, insbesondere für Schutzanzugstoffe
- A1: Außenschicht in Form einer Elastomerschicht
- A2: Außenschicht in Form einer Elastomerschicht
- Z: Zwischenschicht (Einzelfolie, mehrlagige Folie)
- H1: Haftschicht
- H2: Haftschicht
- 2: Schutzanzug
- 4: Materialschnitteil
- 6: Naht
- 8: erste Außenseite
- 10: erste Materialschicht
- 12: Trägermaterial
- 14: zweite Materialschicht
- 16: zweite Außenseite

## Patentansprüche

1. Schutzanzug (2) mit wenigstens einem mehrschichtigen Band (1) für mehrschichtige
Stoffbahnen, wobei das wenigstens eine mehrschichtige Band (1) auf einer Naht (6) zwischen zwei Materialschnittteilen (4) des Schutzanzuges (2) angebracht ist und das mehrschichtige Band (1) mit einer jeweiligen Außenseite (8) der Materialschnittteile (4) verschweißt ist, **dadurch gekennzeichnet dass**, das mehrschichtige Band wenigstens folgenden Schichtenaufbau enthält:
- eine erste und zweite Außenschicht (A1, A2) welche aus Chlorsulfonyl-Polyethylen-Kautschuk (CSM) gebildet ist, und
- eine Zwischenschicht (Z) mit niedriger Permeation, welche sich zwischen der ersten Außenschicht (A1) und der zweiten Außenschicht (A2) befindet, und welche aus wenigstens einer Folie aus PTFE aufgebaut ist, und
- eine einschichtige Haftschicht H1, welche sich zwischen der ersten Außenschicht (A1) und der Zwischenschicht (Z) befindet, und
- eine einschichtige Haftschicht H2, welche sich zwischen der Zwischenschicht (Z) und einer zweiten Außenschicht (A2) befindet, und
wobei die den Materialschnittteilen (4) zugewandte zweite Außenschicht (A2) des mehrschichtigen Bandes (1) aus dem gleichen schweißbaren Material gebildet ist wie die Außenseiten (8) der Materialschnittteile (4) und das schweißbare Material durch Chlorsulfonyl-Polyethylen-Kautschuk (CSM) gebildet ist.

2. Schutzanzug (2) nach Anspruch 1, **dadurch gekennzeichnet, dass** die Außenschichten (A1, A2) jeweils aus einer Kautschukmischung bestehen, enthaltend jeweils wenigstens eine Kautschukkomponente und Mischungsingredienzien.

3. Schutzanzug (2) nach Anspruch 2, **dadurch gekennzeichnet, dass** die Kautschukmischung unvulkanisiert ist.

4. Schutzanzug (2) nach einem der Ansprüche 1 bis 3, **dadurch gekennzeichnet, dass** die Zwischenschicht (Z) aus einer einzigen Folie aufgebaut ist.

## Claims

1. Protective clothing (2) with at least one multilayer web (1) for multilayer material webs, wherein the at least one multilayer web (1) is attached on a seam (6) between two material sections (4) of the protective clothing (2) and the multilayer web (1) is welded to a respective exterior (8) of the material sections (4), **characterized in that** the multilayer web contains at least the following layer structure:
- a first and second outer layer (A1, A2) which is formed from Chlorosulfonyl Polyetheylene Rubber (CSM), and
- an intermediate layer (Z) with lower permeation, which is located between the first outer layer (A1) and the second outer layer (A2), and which is composed of at least one foil made of PTFE, and
- a single layer adhesive layer H1, which is located between the first outer layer (A1) and the intermediate layer (Z), and
- a single layer adhesive layer H2, which is located between the intermediate layer (Z) and a second outer layer (A2), and
- wherein the second outer layer (A2) of the multilayer web (1) facing the material sections (4) is formed from the same weldable material as the exteriors (8) of the material sections (4) and the weldable material is formed by Chlorosulfonyl Polyethylene Rubber (CSM).

2. The protective clothing (2) according to claim 1, **characterized in that** the outer layers (A1, A2) each consist of a rubber mixture, containing in each case at least one rubber component and mixing ingredients.

3. The protective clothing (2) according to claim 2, **characterized in that** the rubber mixture is unvulcanized.

4. The protective clothing (2) according to any of claims 1 to 3, **characterized in that** the intermediate layer (Z) is made of a single foil.

## Revendications

1. Vêtement de protection (2) comportant au moins une bande multicouches (1) destinée à des lés de tissu multicouches, dans lequel la au moins une bande multicouches (1) est disposée sur une couture (6) entre deux parties découpées de matière (4) du vêtement de protection (2) et la bande multicouches (1) est soudée à une face extérieure respective (8) des parties découpées de matières (4), **caractérisé en ce que** la bande multicouche comprend au moins la structure de couches suivante :
- une première et une deuxième couches extérieures (A1, A2), qui sont formées à partir d'un caoutchouc de polyéthylène - chlorosulfonyle (CSM), et
- une couche intermédiaire (Z) ayant une faible perméation, qui se trouve entre la première couche extérieure (A1) et la deuxième couche extérieure (A2), et qui est conçue à partir d'au moins un film de PTFE, et
- une couche d'adhésif monocouche H1, qui se trouve entre la première couche extérieure (A1) et la couche intermédiaire (Z), et
- une couche d'adhésif monocouche H2, qui se trouve entre la couche intermédiaire (Z) et une deuxième couche extérieure (A2), et
dans lequel la deuxième couche extérieure (A2) tournée vers les parties découpées de matière (4) de la bande multicouches (1) est formée à partir de la même matière soudable que les faces extérieures (8) des parties découpées de matière (4) et la matière soudable est formée par le caoutchouc de polyéthylène - chlorosulfonyle (CSM).

2. Vêtement de protection (2) selon la revendication 1, **caractérisé en ce que** les couches extérieures (A1, A2) se composent respectivement d'un mélange de caoutchouc, contenant respectivement au moins un composant de caoutchouc et des ingrédients de mélange.

3. Vêtement de protection (2) selon la revendication 2, **caractérisé en ce que** le mélange de caoutchouc n'est pas vulcanisé.

4. Vêtement de protection (2) selon l'une des revendications 1 à 3, **caractérisé en ce que** la couche intermédiaire (Z) est composée à partir d'un unique film.
